# EUROPÄISCHE PATENTSCHRIFT

(11) **EP 3 369 523 B1**
(45) Veröffentlichungstag und Bekanntmachung des Hinweises auf die Patenterteilung: **04.09.2019**
(21) Anmeldenummer: 18020080.0
(22) Anmeldetag: 27.02.2018
(51) Int. Cl.: B23P 15/00, B21K 1/46, F16B 35/00

(54) **VERFAHREN ZUR HERSTELLUNG EINES BEFESTIGUNGS- ODER VERBINDUNGSMITTELS**
METHOD OF MANUFACTURING A FASTENING OR CONNECTING MEMBER
PROCÉDÉ DE FABRICATION D'UN ÉLEMENT DE FIXATION OU DE CONNEXION

(30) Priorität: 01.03.2017 DE 102017104205
(43) Veröffentlichungstag der Anmeldung: 05.09.2018
(60) Teilanmeldung: 19020092.3
(73) Patentinhaber: Heinrich Hofsäß GmbH & Co. KG, 75223 Niefern (DE)
(72) Erfinder: HINCKEL, Wolfgang, 75179 Pforzheim (DE); HOFSÄß, Roger, 75179 Pforzheim (DE)
(74) Vertreter: Patentanwälte Schuster, Müller & Partner mbB

(56) Entgegenhaltungen:
- FR-A- 1 003 311
- FR-A- 1 004 645
- FR-A- 1 239 649
- JP-A- H03 193 237
- JP-A- H11 117 922
- US-A- 1 978 371

## Beschreibung

### Stand der Technik

Die Erfindung geht aus von einem Verfahren zur Herstellung eines einen Schaft, an dessen einem Ende ein Kopf angeordnet ist, aufweisenden Befestigungs- oder Verbindungsmittels, insbesondere eine Schraube, einem Niet, einen Nagel odgl., aus einem Rohling, nach der Gattung des Anspruchs 1.

Für die Herstellung insbesondere einer Schraube, bei der eine Ringfläche unter dem Kopf als Anschlag gegen das mit ihr zu befestigende Teil dient, wird bevorzugt ein Kaltfließpressverfahren angewandt, bei dem ein auf einer Spule aufgewickelter Draht abgehaspelt und gerade gerichtet wird, um anschließend die erforderlichen Verfahrensschritte, wie eine Anbringung eines Kopfes an den Schaft und ein Versehen des Schaftes mit einem Gewinde vorzunehmen.

Aus der Offenlegungsschrift DE 27 09 873 A1 ist ein Verfahren zur Herstellung einer Schraube bekannt, bei dem ein mit einem Gewinde versehener Schaft mit einem Schraubenkopf durch Verschweissen miteinander verbunden wird. Nachteilig ist hierbei, dass, da die Schraube aus zwei Teilen zusammengesetzt wird, die Festigkeit der Schraube als eher gering einzustufen ist.

In der Offenlegungsschrift DE 199 18 196 A1 wird eine Stellschraube für Scharniere, die zur Justierung von Scharnieren bei Möbelelementen verwendet wird, um die Position einer Tür oder Klappe relativ zu einem Korpus, beispielsweise zu einem Schrank oder einer Vitrine, verändern zu können, offenbart. Eine derartige Stellschraube weist an ihrem einen Ende ein Mitnahmeprofil für Schraubwerkzeuge auf. Das dem Mitnahmeprofil abgewandte Ende ist an einem Hals (Einstich, Verjüngung) angeordnet, so dass dieses Ende in eine an einem Scharnier vorgesehene Führung eingreifen kann. Wird nun durch einen Anwender z.B. ein Schraubendreher an dem Mitnahmeprofil angesetzt, kann die Stellschraube in die Führung hinein oder aus dieser heraus gedreht werden, wodurch sich z.B. die Position der Tür relativ zum Korpus des Möbelteils ändert. Zwar ist die Stellschraube bevorzugt einstückig in einem Kaltfließpreß- und/oder Kaltstauchverfahren hergestellt, doch ist nachteilig zu beurteilen, dass das verwendete Schraubwerkzeug einen Sichtkontakt des Anwenders zu der Stellschraube erschwert, wodurch die Stellschraube oftmals zu tief in die Führung geschraubt wird. Auch die Verfahren zur Herstellung von Befestigungs- oder Verbindungsmitteln, die in der gattungsgemäßen Patentanmeldung FR 1 003 311 A, der Patentanmeldung JP H03 193237 A, der Patentanmeldung US 1 978 371 A und der Patentanmeldung FR 1 004 645 A offenbart werden, vermögen diesen Nachteil nicht zu überwinden.

In der Patentschrift DE 10 2008 038 185 B3 wird ein Verfahren zur Herstellung von Befestigungs- oder Verbindungsmitteln mit radialen Außenkonturen, insbesondere Schrauben und Gewindebolzen, beschrieben, bei dem ein als Ausgangsmaterial zugeführter Draht auf eine vorgegebene Länge abgelängt wird, um zur Anformung eines Kopfes an den Schaft, nachdem der Schaft vorgestaucht wurde, den Schraubenkopf mit einer Innensechskant-Ausnehmung zu formen, bevor in den Schaft mittels eines Gewindepresswerkzeug ein Gewinde eingepresst wird. Nachteilig ist hierbei, dass zur Einpressung des Gewindes jede Schraube einzeln dem Gewindepresswerkzeug zugeführt werden muss.

Der Erfindung liegt daher die Aufgabe zugrunde, ein die Nachteile des Standes der Technik überwindendes Verfahren zur Herstellung eines einen Schaft, an dessen einem Ende ein Kopf angeordnet ist, aufweisenden Gegenstandes, insbesondere eine Schraube (z.B. Stellschraube), einem Niet, einen Nagel odgl..

### Die Erfindung und ihre Vorteile

Das erfindungsgemäße Verfahren zur Herstellung eines einen Schaft, an dessen einem Ende ein Kopf angeordnet ist, aufweisenden Befestigungs- oder Verbindungsmittels, insbesondere eine Schraube, einem Niet, einen Nagel odgl., aus einem Rohling, mit den Merkmalen des Anspruchs 1, hat demgegenüber den Vorteil, dass zur Anformung des Kopfes mittig in eine Stirnseite des Schaftes, der einen konstanten oder einen variablen (z.B. vom Kopf hin abnehmenden) Querschnitt, wobei unter einem Querschnitt ein Schnitt senkrecht zu einer Längsachse des Befestigungs- oder Verbindungsmittels verstanden wird, aufweist, eine Vertiefung (z.B. Bohrung) eingebracht wird, um anschließend mittels eines Anformwerkzeuges die die Vertiefung aufweisende Stirnseite des Schaftes derart zu verformen, dass durch die Verformung ein Kopf, der einen konstanten oder einen variablen Querschnitt aufweist, gebildet wird, wobei mindestens an einer Stelle des Kopfes, für dessen Anformung ein Taumelwerkzeug eingesetzt wird, ein Querschnitt des Kopfes größer ist als der größte Querschnitt des Schaftes, wodurch unter Vereinfachung des Herstellungsverfahrens ein Befestigungs- oder Verbindungsmittel herstellbar ist. Im Falle der Herstellung einer Schraube, insbesondere einer Stellschraube, bewirkt die Anformung des Kopfes durch den im Vergleich zum Schaft größeren Durchmesser eine Stoppfunktion, wodurch die Stellschraube durch einen Anwender nicht zu tief in eine Führung geschraubt werden kann.

Nach einer vorteilhaften Ausgestaltung des erfindungsgemäßen Verfahrens weist die Vertiefung mindestens zwei Durchmesser auf, wobei der größte Durchmesser an der Stirnseite des Schaftes gegeben ist. Bevorzugt weist die Vertiefung zwei Durchmesser auf, so dass zwischen diesen ein stufenförmiger Absatz gebildet wird.

Nach einer zusätzlichen vorteilhaften Ausgestaltung des erfindungsgemäßen Verfahrens wird die Vertiefung mit mindestens einem Bohrer, einem Stufenbohrer oder einem Bohrer und einer Fräse eingebracht.

Nach einer zusätzlichen vorteilhaften Ausgestaltung des erfindungsgemäßen Verfahrens wird zur Anformung des Kopfes an der Stirnseite des Schaftes befindliches Material zumindest teilweise nach außen oder zumindest teilweise nach außen und zur Mitte hin verdrängt. Das nach außen verdrängte Material bildet, da es zumindest teilweise über den Durchmesser des Schaftes hinausragt, einen Anschlag bzw. bewirkt bei einer Stellschraube die gewünschte Stoppfunktion.

Nach einer zusätzlichen vorteilhaften Ausgestaltung des erfindungsgemäßen Verfahrens wird zur Anformung des Kopfes ein Taumelwerkzeug eingesetzt, bei dem die dem Schaft zugewandte Fläche konkav ausgestaltet ist.

Nach einer zusätzlichen vorteilhaften Ausgestaltung des erfindungsgemäßen Verfahrens wird an dem Kopf ein Kopfantrieb ein- und/oder angearbeitet.

Nach einer diesbezüglichen vorteilhaften Ausgestaltung des erfindungsgemäßen Verfahrens wird als Kopfantrieb ein Kopf-Schlitz oder Kopf-Kreuzschlitz eingearbeitet.

Nach einer zusätzlichen vorteilhaften Ausgestaltung des erfindungsgemäßen Verfahrens wird der Kopfantrieb mittels einer Schlitzsäge in den Kopf eingearbeitet.

Nach einer zusätzlichen vorteilhaften Ausgestaltung des erfindungsgemäßen Verfahrens wird als Rohling ein Draht eingesetzt.

Nach einer zusätzlichen vorteilhaften Ausgestaltung des erfindungsgemäßen Verfahrens wird der Rohling zur Bearbeitung von einem Wickelkörper (z.B. Spule) abgewickelt.

Nach einer diesbezüglichen vorteilhaften Ausgestaltung des erfindungsgemäßen Verfahrens wird der Rohling mittels eines Richtrollenapparates gerade gerichtet.

Nach einer zusätzlichen vorteilhaften Ausgestaltung des erfindungsgemäßen Verfahrens wird an dem Rohling, der eine Mantelfläche aufweist, mittels eines Gewinderollapparates oder eines Gewindewalzprozesses zumindest eine Gewindewendel an der Mantelfläche angeformt.

Nach einer zusätzlichen vorteilhaften Ausgestaltung des erfindungsgemäßen Verfahrens erhält der Rohling einen Einstich.

Nach einer zusätzlichen vorteilhaften Ausgestaltung des erfindungsgemäßen Verfahrens wird der Rohling mittels einer Trennsäge oder eines Schneidwerkzeuges abgelängt.

Nach einer diesbezüglichen vorteilhaften Ausgestaltung des erfindungsgemäßen Verfahrens wird der Rohling vor oder nach dem Ablängen einem Schaltteller zugeführt.

Nach einer diesbezüglichen vorteilhaften Ausgestaltung des erfindungsgemäßen Verfahrens wird der Rohling durch den Schaltteller an dem bzw. den für die stirnseitige Anbringung der Vertiefung erforderlichen Werkzeug bzw. Werkzeugen positioniert.

Nach einer zusätzlichen vorteilhaften Ausgestaltung des erfindungsgemäßen Verfahrens wird der Rohling durch den Schaltteller an dem für die Anformung des Kopfes erforderlichen Anformwerkzeuges positioniert.

Nach einer zusätzlichen vorteilhaften Ausgestaltung des erfindungsgemäßen Verfahrens wird das einen Schaft und einen Kopf aufweisende Befestigungs- oder Verbindungsmittel vernickelt.

Weitere Vorteile und vorteilhafte Ausgestaltungen der Erfindung sind der nachfolgenden Beschreibung, den Ansprüchen und der Zeichnungen entnehmbar.

### Zeichnungen

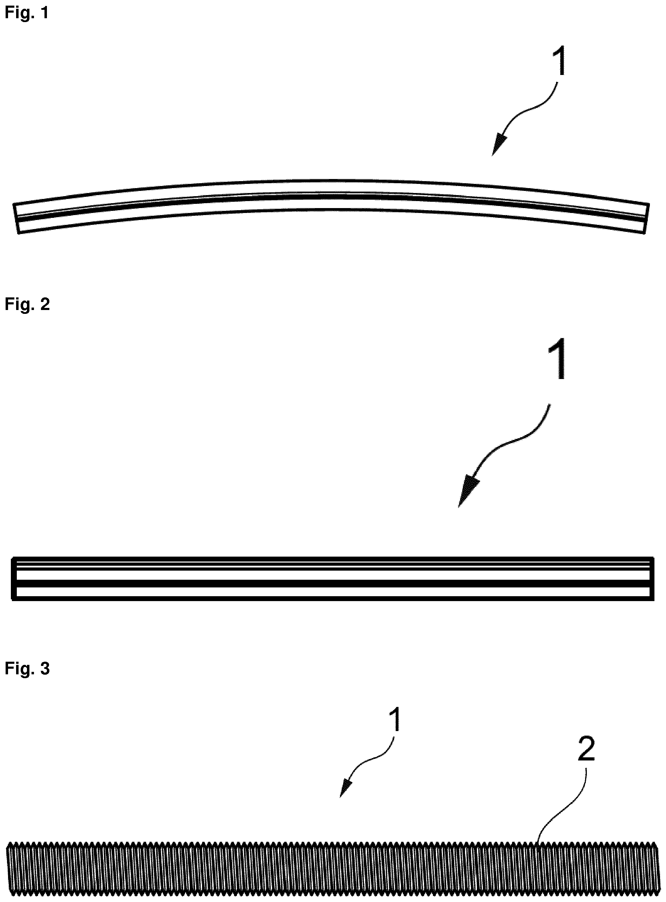

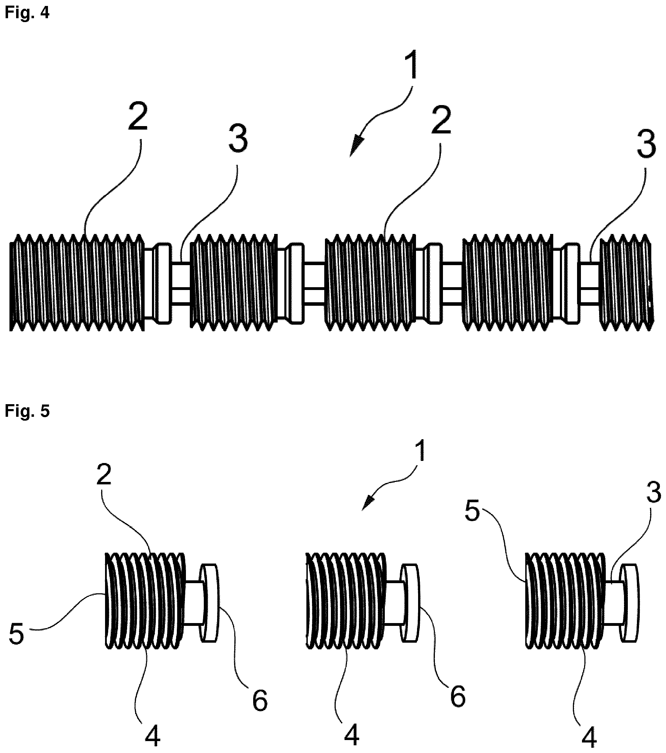

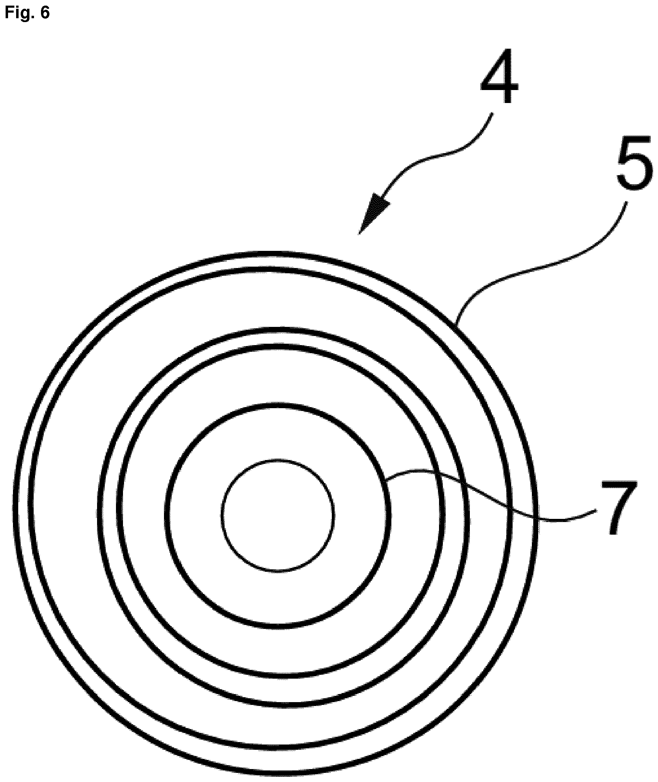

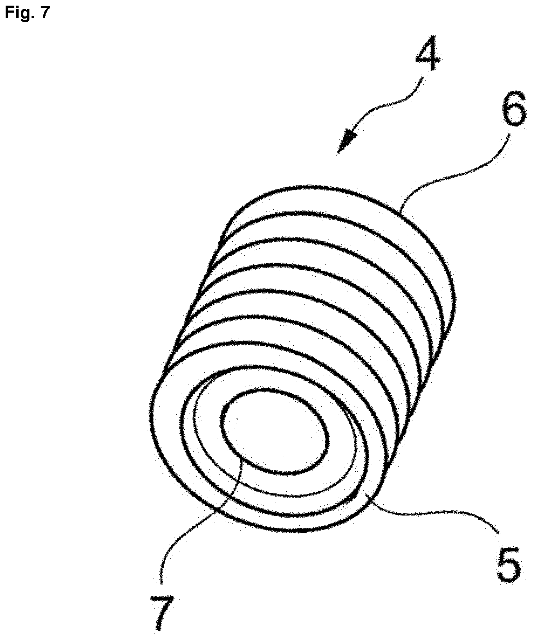

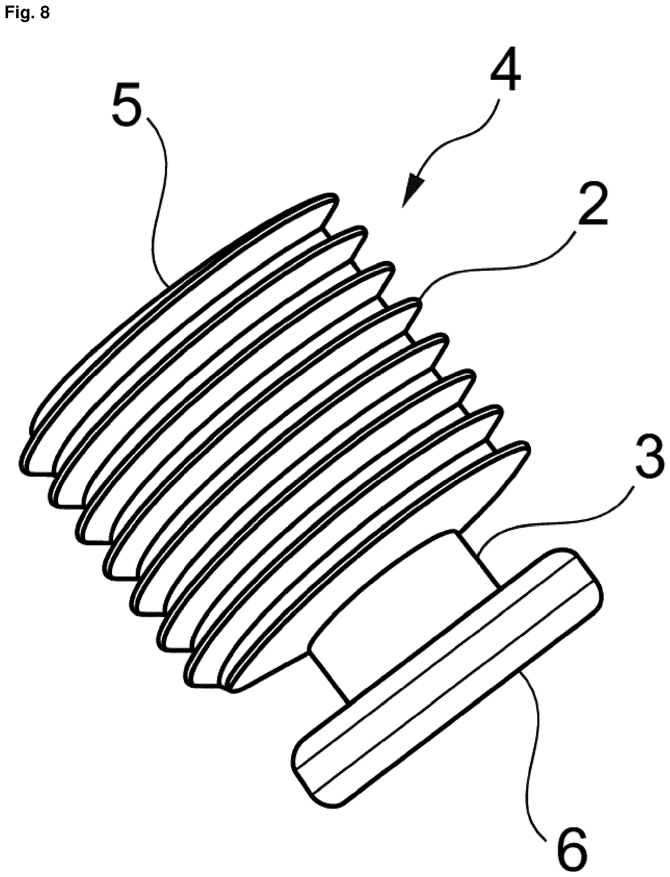

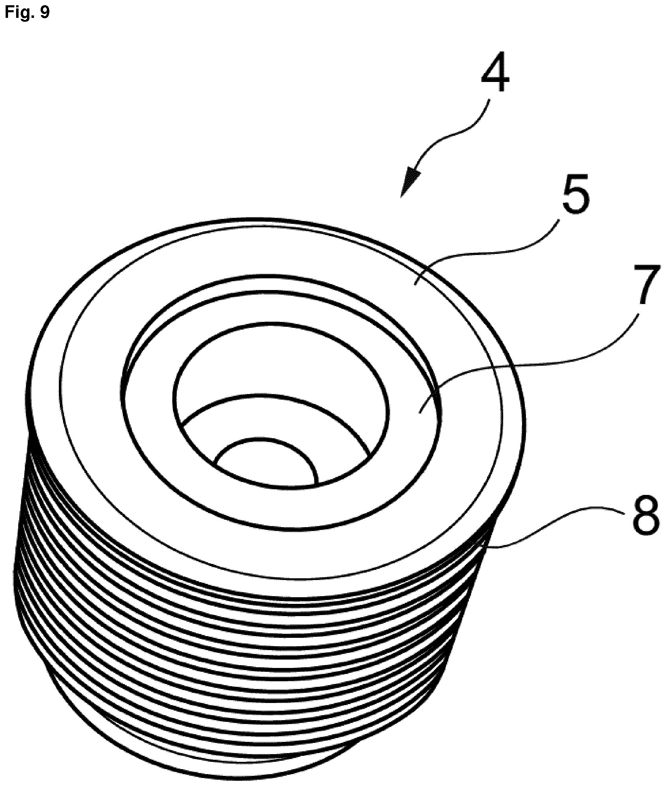

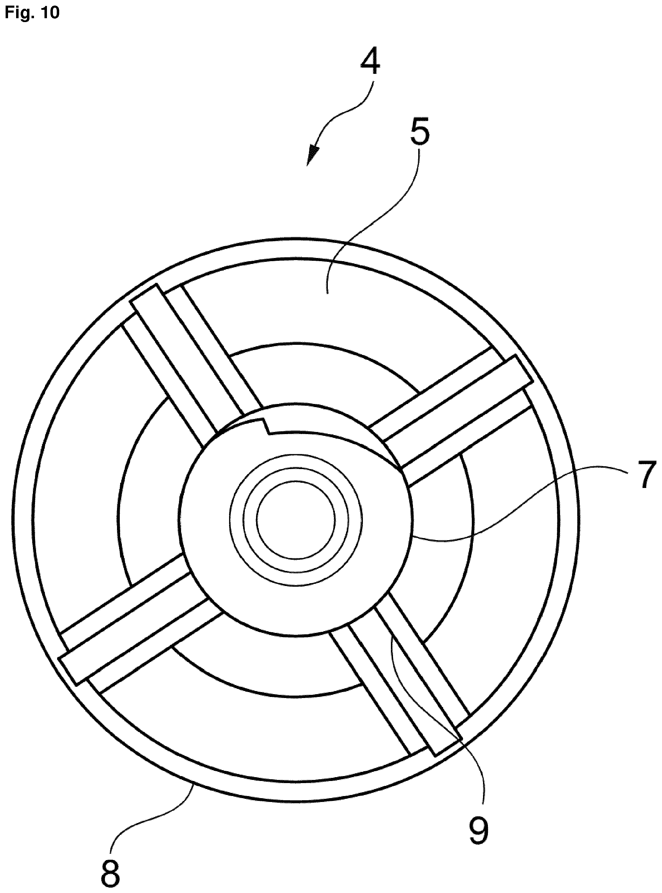

Bevorzugte Ausführungsbeispiele des erfindungsgemäßen Verfahrens sind in den Zeichnungen dargestellt und werden im Folgenden näher erläutert. Es zeigen
- Fig. 1 bis Fig. 10: schematische Darstellungen einzelner bei der Herstellung einer Schraube, insbesondere einer Verstellschraube mit Stopp-Funktion, durchführbare Verfahrensschritte.

### Beschreibung der Ausführungsbeispiele

Fig. 1 bis Fig. 10 zeigen schematische Darstellungen einzelner bei der Herstellung einer Schraube, insbesondere einer Verstellschraube mit Stopp-Funktion (Stopperschraube), durchführbare Verfahrensschritte. Aus Fig. 1 ist ersichtlich, dass ein ungerichteter Draht 1 (Rohling), der bevorzugt ein rundes Grundmaterial aufweist und beispielsweise von einer nicht dargestellten Spindel abgerollt wird, mittels eines nicht dargestellten Richtrollenapparates zu einem gerichteten Draht (Fig. 2) umgeformt wird, um auf ihm anschließend mittels eines nicht dargestellten Gewinderollapparates ein Gewinde 2 (Außengewinde), dass eine gleichbleibende Gewindesteigung oder eine unterschiedliche Gewindesteigung aufweisen kann, aufzurollen (Fig. 3). Anschließend wird in den Draht 1 eine Kontur 3 (Schraubenform) eingestochen (Fig. 4), um anschließend Teile 4 zu vereinzeln, wodurch sie jeweils eine schaftseitige Stirnseite 5 und eine kopfseitige Stirnseite 6 aufweisen (Fig. 5). Bevorzugt wird zur Ablängung auf die gewünschte Gesamtlänge eines Teils 4 durch eine nicht dargestellte Trennsäge (mit Hubbewegung) der die Konturen 3 aufweisende Draht 1 einem nicht dargestellten Schaltteller zugeführt. Die schaftseitige Stirnseite 5 eines Teils 4 wird, um es mit einer Stufenbohrung zu versehen, bevorzugt in dem nicht dargestellten Schaltteller verbleibend, durch Drehen des nicht dargestellten Schalttellers dem nächsten Bearbeitungswerkzeug (Bohrer, spezieller Formbohrer) zugeführt (Fig. 6 und Fig. 7), wodurch das in Fig. 8 dargestellte Teil 4 entsteht. Anschließend wird an der schaftseitigen Stirnseite 5 des Teils 4 ein die Stopp-Funktion bewirkender Kopf 8, der mit oder ohne Gewinde ausgestaltet sein kann, angeformt. Hierzu wird mittels eines nicht dargestellten Taumelwerkzeugs, das beispielsweise das Außenmaß der schaftseitigen Stirnseite 5 auf 7,2 mm formt, an der schaftseitigen Stirnseite 5 befindliches Material zumindest teilweise nach außen oder zumindest teilweise nach außen und zur Mitte hin verdrängt (Fig. 9) und in den Kopf 8 des Teils 4, das aufgrund der Anformung des Kopfes 8 kürzer als bei seiner Ablängung ist, mittels eines nicht dargestellten Sägeblattes ein Kreuzschlitz 9 gesägt (Fig. 10).

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Draht
- 2: Gewinde
- 3: Kontur
- 4: Teil
- 5: Schaftseitige Stirnseite
- 6: Kopfseitige Stirnseite
- 7: Stufenbohrung
- 8: Kopf
- 9: Kreuzschlitz

## Patentansprüche

1. Verfahren zur Herstellung eines einen Schaft, an dessen einem Ende ein Kopf (8) angeformt ist, aufweisenden Befestigungs- oder Verbindungsmittels, insbesondere einer Schraube, einen Gewindebolzen, einem Niet, einem Nagel odgl., aus einem Rohling, wobei zur Anformung des Kopfes (8) mittig in eine Stirnseite des Schaftes, der einen konstanten oder einen variablen Querschnitt aufweist, eine Vertiefung eingebracht wird, um anschließend mittels eines Anformwerkzeuges die die Vertiefung aufweisende Stirnseite des Schaftes derart zu verformen, dass durch die Verformung ein Kopf (8), der einen konstanten oder einen variablen Querschnitt aufweist, gebildet wird, wobei mindestens an einer Stelle des Kopfes (8) ein Querschnitt des Kopfes (8) größer ist als der größte Querschnitt des Schaftes,
**dadurch gekennzeichnet,**
**dass** zur Anformung des Kopfes (8) ein Taumelwerkzeug eingesetzt wird.

2. Verfahren, nach Anspruch 1,
**dadurch gekennzeichnet,**
**dass** die Vertiefung mindestens zwei Durchmesser aufweist, wobei der größte Durchmesser an der Stirnseite des Schaftes gegeben ist.

3. Verfahren, nach Anspruch 1 oder Anspruch 2,
**dadurch gekennzeichnet,**
**dass** die Vertiefung mit mindestens einem Bohrer, einem Stufenbohrer oder einem Bohrer und einer Fräse eingebracht wird.

4. Verfahren, nach einem der vorhergehenden Ansprüche,
**dadurch gekennzeichnet,**
**dass** zur Anformung des Kopfes (8) an der Stirnseite des Schaftes befindliches Material zumindest teilweise nach außen oder zumindest teilweise nach außen und zur Mitte hin verdrängt wird.

5. Verfahren, nach einem der vorhergehenden Ansprüche,
**dadurch gekennzeichnet,**
**dass** zur Anformung des Kopfes (8) ein Taumelwerkzeug eingesetzt wird, bei dem die dem Schaft zugewandte Fläche konkav ausgestaltet ist.

6. Verfahren, nach einem der vorhergehenden Ansprüche,
**dadurch gekennzeichnet,**
**dass** an dem Kopf (8) ein Kopfantrieb ein- und/oder angearbeitet wird.

7. Verfahren, nach Anspruch 6,
**dadurch gekennzeichnet,**
**dass** als Kopfantrieb ein Kopf-Schlitz oder Kopf-Kreuzschlitz eingearbeitet wird.

8. Verfahren, nach Anspruch 6 oder Anspruch 7,
**dadurch gekennzeichnet,**
**dass** der Kopfantrieb mittels einer Schlitzsäge in den Kopf (8) eingearbeitet wird.

9. Verfahren, nach einem der vorhergehenden Ansprüche,
**dadurch gekennzeichnet,**
**dass** als Rohling ein Draht eingesetzt wird.

10. Verfahren, nach einem der vorhergehenden Ansprüche,
**dadurch gekennzeichnet,**
**dass** der Rohling zur Bearbeitung von einem Wickelkörper abgewickelt wird.

11. Verfahren, nach Anspruch 10,
**dadurch gekennzeichnet,**
**dass** der Rohling mittels eines Richtrollenapparates gerade gerichtet wird.

12. Verfahren, nach einem der vorhergehenden Ansprüche,
**dadurch gekennzeichnet,**
**dass** an dem Rohling, der eine Mantelfläche aufweist, mittels eines Gewinderollapparates oder eines Gewindewalzprozesses an der Mantelfläche zumindest eine Gewindewendel angeformt wird.

13. Verfahren, nach einem der vorhergehenden Ansprüche,
**dadurch gekennzeichnet,**
**dass** der Rohling einen Einstich erhält.

14. Verfahren, nach einem der vorhergehenden Ansprüche,
**dadurch gekennzeichnet,**
**dass** der Rohling mittels einer Trennsäge oder eines Schneidwerkzeuges abgelängt wird.

15. Verfahren, nach Anspruch 14,
**dadurch gekennzeichnet,**
**dass** der Rohling vor oder nach dem Ablängen einem Schaltteller zugeführt wird.

16. Verfahren, nach Anspruch 15,
**dadurch gekennzeichnet,**
**dass** der Rohling durch den Schaltteller an dem bzw. den für die stirnseitige Anbringung der Vertiefung erforderlichen Werkzeug bzw. Werkzeugen positioniert wird.

17. Verfahren, nach Anspruch 15 oder Anspruch 16,
**dadurch gekennzeichnet,**
**dass** der Rohling durch den Schaltteller an dem für die Anformung des Kopfes (8) erforderlichen Anformwerkzeuges positioniert wird.

18. Verfahren, nach einem der vorhergehenden Ansprüche,
**dadurch gekennzeichnet,**
**dass** das einen Schaft und einen Kopf (8) aufweisende Befestigungs- oder Verbindungsmittel vernickelt wird.

## Claims

1. A method for producing, from a blank, a fastener or connector, in particular a screw, a threaded bolt, a rivet, a nail or the like having a shank, on one end of which a head is arranged, wherein for shaping the head (8), a recess is made in the center of an end face of the shank, said shank having a constant or variable cross section, in order to deform the end face of the shank having the recess using a shaping tool in such a way that by means of the deformation, a head (8) having a constant or variable cross section is formed, wherein a cross section of the head (8) is larger, at least on one place of the head (8), than the largest cross section of the shank, **characterized in that** a wobbling tool is used for shaping the head (8).

2. The method according to Claim 1, **characterized in that** the recess has at least two diameters, wherein the largest diameter is on the end face of the shank.

3. The method according to Claim 1 or 2, **characterized in that** the recess is made using at least one drill, a step drill, or a drill and a milling machine.

4. The method according to any one of the preceding claims, **characterized in that** for shaping the head (8), material on the end face of the shank is at least partially displaced outward or at least partially displaced outward and toward the center.

5. The method according to any one of the preceding claims, **characterized in that** for shaping the head (8), use is made of a wobbling tool in which the area facing the shank is concave in design.

6. The method according to any one of the preceding claims, **characterized in that** a head drive is formed in or on the head (8).

7. The method according to Claim 6, **characterized in that** a slit or a cross slit is inwrought as a head drive.

8. The method according to Claim 6 or 7, **characterized in that** the head drive is formed in the head (8) by means of a rip saw.

9. The method according to any one of the preceding claims, **characterized in that** a wire is used as a blank.

10. The method according to any one of the preceding claims, **characterized in that** the blank is unwound from a bobbin for processing.

11. The method according to Claim 10, **characterized in that** the blank is straightened by means of a straightening roller tool.

12. The method according to any one of the preceding claims, **characterized in that** the blank has an outer surface and that at least one threaded coil is formed on the outer surface by means of a thread rolling machine or by means of a thread milling process.

13. The method according to any one of the preceding claims, **characterized in that** the blank receives a puncture.

14. The method according to any one of the preceding claims, **characterized in that** the blank is cut using a dicing saw or cutting tool.

15. The method according to Claim 14, **characterized in that** the blank is supplied to an indexing plate before or after cutting.

16. The method according to Claim 15, **characterized in that** the blank is positioned by the indexing plate on the tool or tools needed for making the end face recess.

17. The method according to Claim 15 or Claim 16, **characterized in that** the blank is positioned by the indexing plate on the shaping tool needed for shaping the head (8).

18. The method according to any one of the preceding claims, **characterized in that** the fastener or connector having a shank and a head (8) is nickel plated.

## Revendications

1. Procédé destiné à fabriquer un moyen de fixation ou d'assemblage comportant une tige, sur l'une des extrémités de laquelle est surmoulée une tête, notamment une vis, un boulon fileté, un rivet, un clou ou similaire à partir d'une ébauche, pour surmouler la tête (8), un creux étant ménagé au centre dans une face frontale de la tige, qui présente une section transversale constante ou variable, pour déformer par la suite au moyen d'un outil de surmoulage la face frontale de la tige comportant le creux, de telle sorte que la déformation donne naissance à la tête (8), qui présente une section transversale constante ou variable, au moins en un endroit de la tête (8), une section transversale de la tête (8) étant supérieure à la plus grande section transversale de la tige, **caractérisé en ce que** pour le surmoulage de la tête (8), on met en oeuvre un outil de nutation.

2. Procédé selon la revendication 1, **caractérisé en ce que** le creux comporte au moins deux diamètres, le plus grand diamètre étant donné sur la face frontale de la tige.

3. Procédé selon la revendication 1 ou la revendication 2, **caractérisé en ce qu'**on ménage le creux à l'aide d'au moins un foret, un foret étagé ou un foret et une fraise.

4. Procédé selon l'une quelconque des revendications précédentes, **caractérisé en ce que** pour surmouler la tête (8), on refoule au moins partiellement vers l'extérieur ou au moins partiellement vers l'extérieur et vers le centre de la matière se trouvant sur la face frontale de la tige.

5. Procédé selon l'une quelconque des revendications précédentes, **caractérisé en ce que** pour surmouler la tête (8), on met en oeuvre un outil de nutation sur lequel la surface dirigée vers la tige est conçue de forme concave.

6. Procédé selon l'une quelconque des revendications précédentes, **caractérisé en ce que** sur la tête (8) est incorporé et/ou usiné un entraînement de tête.

7. Procédé selon la revendication 6, **caractérisé en ce qu'**en tant qu'entraînement de tête, on incorpore une fente de tête ou une fente cruciforme de tête.

8. Procédé selon la revendication 6 ou la revendication 7, **caractérisé en ce qu'**on incorpore l'entraînement de tête dans la tête (8) à l'aide d'une scie à tenon.

9. Procédé selon l'une quelconque des revendications précédentes, **caractérisé en ce qu'**on met en oeuvre en tant qu'ébauche un fil métallique.

10. Procédé selon l'une quelconque des revendications précédentes, **caractérisé en ce que** pour l'usinage, on déroule l'ébauche à partir d'un corps d'enroulement.

11. Procédé selon la revendication 10, **caractérisé en ce qu'**on oriente l'ébauche en ligne droite au moyen d'un appareil pourvu de rouleaux à dresser.

12. Procédé selon l'une quelconque des revendications précédentes, **caractérisé en ce que** sur l'ébauche qui dispose d'une surface d'enveloppe, on surmoule sur la surface d'enveloppe au moins une spirale de filet, à l'aide d'un appareil à rouler les filets ou d'un processus de laminage des filets.

13. Procédé selon l'une quelconque des revendications précédentes, **caractérisé en ce qu'**on munit l'ébauche d'une gorge.

14. Procédé selon l'une quelconque des revendications précédentes, **caractérisé en ce qu'**on sectionne l'ébauche au moyen d'une tronçonneuse ou d'un outil de coupe.

15. Procédé selon la revendication 14, **caractérisé en ce qu'**avant ou après le sectionnement, on amène l'ébauche vers un plateau rotatif.

16. Procédé selon la revendication 15, **caractérisé en ce que** l'ébauche est positionnée par le plateau rotatif sur l'outil ou sur les outils requis pour ménager le creux sur la face frontale.

17. Procédé selon la revendication 15 ou la revendication 16, **caractérisé en ce que** l'ébauche est positionnée par le plateau rotatif sur l'outil requis pour le surmoulage de la tête (8).

18. Procédé selon l'une quelconque des revendications précédentes, **caractérisé en ce qu'**on procède au nickelage d'un moyen de fixation ou d'assemblage comportant une tige et une tête (8).
